# EUROPÄISCHE PATENTANMELDUNG

(11) **EP 0 554 761 A1**
(43) Veröffentlichungstag der Anmeldung: **11.08.1993**
(21) Anmeldenummer: 93101148.0
(22) Anmeldetag: 26.01.1993
(51) Int. Cl.: C08J 11/16, C08J 11/18, C08J 11/12

(54) **Verfahren zum Recycling von Polymerwerkstoffen**

(30) Priorität: 04.02.1992 DE 4203052; 07.03.1992 DE 4207328; 17.06.1992 DE 4219794; 30.06.1992 DE 4221408
(71) Anmelder: MENGES, Georg, Prof. Dr.-Ing., D-52072 Aachen (DE)
(72) Erfinder: Menges, Georg, Prof. Dr.-Ing., W-5100 Aachen (DE); Fischer, Reinhard, Dr., W-5100 Aachen (DE); Lackner, Volker, Dipl.-Ing., W-5100 Aachen (DE)

(57) **Zusammenfassung**

Verfahren zum Recycling von Polymerwerkstoffen und inbesondere ein Verfahren, bei dem Polymermaterialien aus diese enthaltenden Gegenstände entfernt und anschließend aufgearbeitet werden, in dem die Polymerwerkstoffe bei Temperaturen, bei welchen die Polymere eine dünnflüssige Schmelze bilden oder sich in niedermolekulare Bestandteile zersetzen, mit Hilfsstoffen in Kontakt gebracht werden, wobei die in den Polymerwerkstoffen enthaltenen Halogene mit den Hilfsstoffen Halogenide bilden, welche aus dem Gemisch abgetrennt werden.

## Beschreibung

Die vorliegende Erfindung betrifft ein Verfahren zum Recycling von Polymerwerkstoffen und insbesondere ein Verfahren, bei dem Polymermaterialien aus diese enthaltenden Gegenständen entfernt und anschließend aufgearbeitet werden.

Es besteht ein erheblicher Bedarf, Kunststoffabfälle, d. h. Polymerwerkstoffe, so aufzuarbeiten, daß sie hierdurch einer nützlichen, in der Regel stofflichen Wiederverwendung zugeführt werden können. Sie müssen hierzu zumindest aufgeschmolzen werden, jedoch ist in vielen Fällen darüber hinaus eine Aufspaltung der Makromoleküle in niedermolekulare Bruchstücke vorzuziehen, weil derartige Stoffe eine dünnflüssige Schmelze bilden oder gasförmig sind. Gegenüber den höhermolekularen Kunststoffschmelzen besteht so der Vorteil leichter durchführbarer Reinigung von unerwünschten Begleitern. Insbesondere besteht die Möglichkeit, die so erhaltenen Produkte dann zusammen mit anderen Rohstoffen für neue Kohlenwasserstoffe zu vermischen und mit diesen zusammen zu Neuprodukten aufzuarbeiten. Allerdings besteht bei derartigen Prozessen die Forderung besonders großer Reinheit der Eingangsstoffe von gewissen Verunreinigungen, insbesondere von Halogenen und dabei wieder besonders von Chlor.

Es gibt einige Vorschläge, Kunststoffabfälle wiederzuverwenden, jedoch ist dabei ein besonders großes Problem der Gehalt an Halogenverbindungen, in erster Linie von Chlorverbindungen. Chlor ist wegen des großen Anteils an PVC in Kunststoffen allgemein, fast immer auch in Abfallkunststoffen enthalten. Zudem enthalten einige Hilfsstoffe, die bei der Herstellung und Verarbeitung benötigt werden, Halogenverbindungen. In den meisten Fällen müssen die Halogene bzw. ihre Verbindungen abgetrennt werden; insbesondere bei der chemisch stofflichen Wiederverwendung dieser Kohlenwasserstoffverbindungen sind die Halogene selbst in kleinen Gehalten nicht tolerierbar.

Da die thermoplastischen Kunststoffe und so auch die Gemische daraus in der Regel bei Temperaturen über 200°C als Schmelze vorliegen, wird man deshalb dieser Temperatur die Kunststoffe für eine Weiterverwendung vorbereiten; bei diesen Temperaturen und in dieser Verfahrensstufe bietet sich daher auch die Enthalogenierung an, ist jedoch darauf nicht festgeschrieben. Die gleichen Methoden eignen sich auch für andere Zustandsformen, in welchen Polymerabfälle gebracht werden können, wie Pulver oder Lösungen. Da thermoplastische Kunststoffschmelzen Füllstoffe bis 60 Vol% aufnehmen können, ist es möglich, sowohl gefüllte Kunststoffe wie Duroplaste oder Elastomere, also vernetzte Polymerwerkstoffe, in diese Thermoplastschmelzen einzuarbeiten und mit zu behandeln, wenn sie entweder im Prozeß oder davor feinpulverig zerlegt worden sind.

Es sind Verfahren bekannt, die sich der verschiedensten Apparate bedienen, um solche Abfallgemische zunächst in eine Schmelze zu überführen, um sie dann im gleichen Apparat oder nachgeschalteten Apparaturen weiterzubehandeln, d. h. zu niedermolekularen Ölen oder Wachsen und Gasen abzubauen. So wurden z. B. Extruder in der Patentanmeldung PCT EP 91/00959 und den entsprechenden deutschen Anmeldungen hierfür empfohlen. Es gelingt auch, wie in der genannten Anmeldung und in der deutschen Offenlegungsschritt DE 40 38 896 A1 beschrieben worden ist, rein thermisch zwischen 250 und 350° die Halogenanteile in der Polymerschmelze bereits bis zu unter 1 % abzuspalten. Es hat sich aber gezeigt, daß diese Anteile für manche Anwendungen noch zu hoch sind.

In der EP-A-0 236 701 ist beschrieben, "daß es möglich ist, organisch gebundene Halogene mit Wasserstoff umzusetzen und Halogenwasserstoff zu erzeugen. Diese Halogenwasserstoffe gelangen gemeinsam mit den hydrierten Kunststoffen in Abscheider, in denen bei entsprechenden Temperaturen erst die schwerflüchtigen und später die leichtflüchtigen Bestandteile der Produkte abgetrennt werden. Zum Schluß bleiben die besonders niedrig siedenden Kohlenwasserstoffe zusammen mit den Halogenwasserstoffen gasförmig übrig, aus denen die Halogenwasserstoffe mit üblichen Methoden ausgewaschen werden".

Dieses Verfahren hat jedoch den Nachteil, daß die sehr reaktiven Halogenwasserstoffe mit den Spaltprodukten bei der Aufarbeitung der Produkte zu halogenierten Kohlenwasserstoffen reagieren können.

Ein weiteres Problem steilen Bauteile dar, deren Träger, Gehäuse oder Bauteile aus Kunststoffen, meistens aus thermoplastischen Kunststoffen, bestehen, deren Bestückung jedoch aus anderen Werkstoffen, in erster Linie aus Metallen, besteht, oder umgekehrt. Besonders typische Beispiele finden sich im Feingerätebau und in der Elektronik, z. B. bei Leiterplatten für elektronische Schaltungen. Hier sind sehr viele Kleinteile auf einer Trägerplatte befestigt, die einzeln zu entnehmen sehr aufwendig erscheint, da zudem ihr Wert vor allem in den Werkstoffen steckt, aus denen sie hergestellt sind.

Aber auch viele sonstige Geräte und Vorrichtungen bestehen beispielsweise aus einem Kunststoffgehäuse und Motoren, die aus Eisen und Kupfer bestehen. Darüber hinaus gibt es aber auch Bauteile aus Metallen und anderen Werkstoffen, die mit Kunststoffen beschichtet sind.

Bisher sind schon eine Reihe von Verfahren bekannt, die sich die Trennung von Kunststoffen von anderen Werkstoffen zum Ziel gesetzt hatten. Erwähnt sei hier z. B. Pyrolyse, Abbrennen. Diese Verfahren haben sich in der Praxis aus verschiedensten Gründen nicht durchsetzen können. Auch die mechanische Zerkleinerung mit anschließender mechanischer Trennung und in Schwerefeldern wird vorgeschlagen. Jedoch ist dieses Verfahren mit relativ hohen Kosten für die Zerkleinerung verbunden.

Aufgabe der vorliegenden Erfindung ist es, ein Verfahren zur Verfügung zu stellen, womit Polymermaterialien so aufgearbeitet werden können, daß sie zu abgebauten Polymerprodukten umgearbeitet werden, die nur noch so geringe Anteile von Nebenprodukten, insbesondere Halogenen, enthalten, daß sie einer erneuten Verwendung zugeführt werden können.

Eine weitere Aufgabe der vorliegenden Erfindung ist es, polymerhaltige Bauteile von anderen Materialien zu trennen und die Kunststoffe so wieder aufzuarbeiten, daß sie einer Wiederverwendung zugeführt werden können.

Gegenstand der vorliegenden Erfindung ist demgemäß ein Verfahren zum Recycling von Polymerwerkstoffen, worin diese, ggf. nach dem Entfernen von anderen Materialien, bei Temperaturen, bei welchen die Polymere eine dünnflüssige Schmelze bilden oder sich in niedermolekulare Bestandteile zersetzen, mit Hilfsstoffen in Kontakt gebracht werden, wobei die in den Polymerwerkstoffen enthaltenen Halogene mit den Hilfsstoffen Halogenide bilden, welche aus dem Gemisch abgetrennt werden können.

Ein weiterer Gegenstand der vorliegenden Erfindung ist ein Verfahren, bei dem die Polymerwerkstoffe von anderen Materialien dadurch abgetrennt werden, daß sich die polymerhaltigen Gegenstände durch Kontakt mit einem Bad aus einem unterhalb 400°C flüssigen Material in verflüssigte Polymere und nichtverflüssigte, andere Werkstoffe trennen.

Der Erfindung liegt nun die überraschende Beobachtung zugrunde, daß der Gehalt an Halogenen in der Polymerschmelze sich noch um Größenordnungen vermindern läßt, wenn man die Kunststoffe entweder in einer Schmelze geeigneter Hilfsstoffe schmilzt oder die anderweitig aufgeschmolzene Polymermasse durch ein solches Schmelzbad hindurchpreßt, oder die Hilfsstoffe mit der Polymerschmelze in Kontakt bringt.

Die verwendeten Hilfsstoffe, die entweder in das Kunststoffgut, deren Schmelze bzw. in die bereits vorenthalogenierte Schmelze oder in daraus hergestelltem Pulver oder Lösungen eingebracht werden oder selbst als Schmelze vorgelegt werden, in welche die aufzuarbeitenden Kunststoffe eingebracht werden, sind Verbindungen, die mit den in den Kunststoffen vorliegenden Halogenen bei den Verfahrenstemperaturen zu Halogeniden reagieren. Das bedeutet, daß die Hilfsstoffe eine so hohe Affinität zu Halogenen haben müssen, daß sie den Halogenverbindungen, die in den Kunststoffen vorliegen, die gebundenen Halogenatome entreißen. Es gibt folgende Arten von Hilfsstoffen, die sich für das erfindungsgemäße Verfahren eignen:
a: Hilfsstoffe, welche Halogenverbindungen bilden, die bei den vorliegenden Temperaturen in den Reaktoren feste Halogenide bilden. Diese festen Halogenide werden durch Filtrieren, oder Schwerkraftabtrennung aus der Polymerschmelze abgetrennt. Die Abtrennung kann auch durch Vergasen und Abdestillieren der entstandenen Öle vorgenommen werden.
b: Hilfsstoffe, die flüchtige Halogenide bilden, deren Siedepunkt so niedrig ist, daß sie bei erheblich unter den Temperaturen, bei der die Kunststoffschmelze sich befindet, bereits flüchtig sind, so daß sie aus der Schmelze ausgasen und so leicht abgezogen werden können.
c: Hilfsstoffe, die mit den Halogenen, die in der Kunststoffschmelze gebunden sind, derartig reagieren, daß sich Stoffe bilden, die sich für eine Solventextraktion eignen.

Als Hilfsstoffe, die als Schmelze vorgelegt werden, werden Metalle, Metalloxide, Anhydride oder Salze eingesetzt, die bei Temperaturen bis ungefähr 750°C eine stabile Schmelze mit niedrigem Dampfdruck bilden, deren Schmelzpunkt bevorzugt unter 600°C liegt, z. B. Blei, Zinn, Wismut, Antimon, Alkali- und Erdalkalimetalle oder niedrig schmelzendes Glas und Soda.

Als Stoffe, die einer vorgelegten Kunststoffschmelze, einer Kunststoff-Dispersion oder Lösung zugefügt werden, sind Luft, Sauerstoff, Wasser in Form von Dampf, Wasserstoff und solche organischen und anorganischen Verbindungen geeignet, die einen Anteil an Wasserstoff, z. B. Tetralin, gebunden enthalten oder feste und flüssige Metalle, Metallverbindungen, Erdalkalien oder Erdalkaliverbindungen, der bei den Verfahrenstemperaturen leicht abgegeben wird und mit vorliegendem Halogen reagieren kann. Voraussetzung für die einzusetzenden Stoffe ist, daß sie Halogenide bilden, die sich leicht aus dem Reaktionsprodukt abtrennen lassen.

Das erfindungsgemäße Verfahren wird bei einer Temperatur durchgeführt, bei welcher der Kunststoff als Schmelze vorliegt. In der Regel wird das Verfahren in einem Temperaturbereich von über 200°C bis 700°C, bevorzugt über 300°C, durchgeführt.

Die unterschiedlichen Möglichkeiten das erfindungsgemäße Verfahren durchzuführen, nämlich die Kunststoffe in eine vorgegebene Schmelze einzubringen oder durchzupressen, oder die Hilfsstoffe zu einer vorliegenden Kunststoffschmelze zuzugeben oder als Gase einzuleiten, bringen verschiedene Vorteile mit sich, so daß das erfindungsgemäße Verfahren jeweils den äußeren, z. B. betrieblichen, Gegebenheiten angepaßt werden kann.

Wird z. B. eine Metallschmelze verwendet, ergeben sich mehrere positive Effekte.

Der Wärmeübergang wird erheblich verbessert und die hohe Wärmekapazität, insbesondere wenn Metalle benutzt werden, gewährleistet eine sehr konstante Temperatur, so daß eine präzise Prozeßführung möglich ist, die gestattet, den Abbaugrad in sehr engen Grenzen vorzugeben und einzuhalten. Die hohe Reaktivität der Halogene, insbesondere des fast immer in beachtlichen Mengen vorhandenen Chlors mit den Metallen, führt zur schnellen Reaktion der abgespaltenen Halogenatome mit Metallatomen. Werden Temperaturen von über 300°C eingestellt, dann sind die Halogenatome an den Kohlenwasserstoffmolekülen nur noch sehr locker gebunden, so daß hier eine vollständige Umsetzung eintritt, was dadurch unterstützt wird, daß ein Gleichgewicht nicht auftritt, denn einerseits bewegt sich der zweckmäßigerweise fein verteilte Kunststoff schon aus Dichtegründen schnell durch die Metallschmelze. Deswegen wird man daher auch die Kunststoffe am Boden der Schmelzwanne einleiten. Andererseits werden die Metallhalogenide infolge ihrer niedrigen Dichte sofort an die Schmelzeoberfläche in die Schlacke abgeschieden. Da jedoch Kunststoffe zum Teil gegen die Abspaltung von Chlor z. B. in PVC mit Schwermetallen stabilisiert werden, sind auch fest gebundene überwiegend anorganische Halogenide vorhanden. Glücklicherweise zeigt sich aber, daß durch genügend feine Aufspaltung des Kunststoffstromes insbesondere an der Einleitungsstelle in das Metallbad eine Trennung in die anorganischen Halogenide einerseits und Kunststoffmoleküle bzw. deren organische Spaltprodukte andererseits möglich ist, wenn man die Temperaturen entsprechend der Bindungsfestigkeit so einstellt, daß der Abbau der Kunststoffe so weit getrieben wird, daß bei den vorliegenden Temperaturen die Kunststoffe niederviskose Öltröpfchen oder Gasblasen bilden, und sich von der Schmelze und Schlacke trennen. Die Halogenide hingegen gehen in die Schlacken, wenn man solche Metalle auswählt, die Halogenide bilden, deren Siedepunkt deutlich über deren Schmelztemperatur liegt. Durch Einstellung der Verfahrensparameter, Temperatur, Badhöhe und Art der Metallschmelze, Temperatur und Verteilung der Kunststoffschmelze lassen sich somit die gewünschten Ergebnisse erreichen.

Das Verfahren kann auch umgekehrt durchgeführt werden, d. h. die Hilfsstoffe, die mit dem in den Kunststoffen enthaltenen Chlor zu Chloriden reagieren, werden in die Kunststoffschmelze, in ein Pulver aus abgebauten Polymeren oder eine Lösung, z. B. von Polyolefinwerkstoffen in Dekalin, eingebracht. Die gebildeten Halogenide werden anschließend aus dem Gemisch abgetrennt.

Wenn mit Polymerschmelzen gearbeitet wird, dann kann es vorteilhaft sein, zunächst die große Menge des Chlors bzw. der Halogene thermisch gemäß DE 40 38 896 A1 abzutreiben und dann erst geeignete Zusätze in der oben beschriebenen Form in die Polymerschmelze einzubringen. Dies ist schon deswegen vorteilhaft, weil sich die Kunststoffabfälle dank der herrschenden Temperaturen bereits in einer niedrigen Viskosität befinden, in welche sich sowohl Pulver, wie Flüssigkeiten, wie Gase, sehr gut einmischen und gleichmäßig verteilen lassen, so daß der Aufwand geringer ist als beim Eintrag der Polymerschmelze in ein Metallbad.

Als vorteilhaft hat es sich auch erwiesen, wenn die aus den zugegebenen, geeigneten Hilfsstoffen gebildeten Halogenide bereits im Bereich der Schmelz- bzw. Lösungstemperatur der Polymerabfälle flüchtig sind, so daß sie von diesen abgetrennt werden, bevor der größte Anteil der Polymerabfälle in den gasförmigen Zustand übergeht.

In diesem Bereich werden auch geringe Anteile von Lösungsmittelrückständen, Weichmachern, Gleitmittel und dgl. verflüchtigt, die zusammen mit den Halogeniden abgetrennt werden.

Es hat sich nun überraschend gezeigt, daß die Halogenwasserstoffe durch Zugabe von Wasserstoff oder Wasserstoff abgebenden Stoffen, z. B. Tetralin, zu den Polymerabfällen sich schon bei verhältnismäßig niedrigem Druck in den verwendeten Mischvorrichtungen, bevorzugt Extrudern, bilden und bereits aus diesen abgesaugt werden können und nicht erst am Ende des Verfahrens durch Abtrennen in der Gasphase, wie es in dem o. a. Europapatent beschrieben worden ist.

Die aus diesen Verfahren gewonnenen enthalogenierten Produkte sind in der Regel niedermolekulare Verbindungen, insbesondere Monomere und andere Kohlenwasserstoffe aus Bruchstücken der Makromoleküle der aufgearbeiteten Kunststoffe (Polymerwerkstoffe). Die Verfahrensprodukte werden als Gase, Öl oder Wachs erhalten und einer weiteren Behandlung in einer der bei Mineralöl oder Chemischen Industrie üblichen Art zugeführt.

Das erfindungsgemäße Verfahren hat den Vorteil, daß es bis zur Trennung der Verfahrensprodukte in einer einzigen Anlage durchgeführt werden kann. Für die Durchführung der aus dem Stand der Technik bekannten Verfahren waren für die einzelnen Verfahrensschritte getrennte Anlagen erforderlich, was den Zeit- und Kostenaufwand der Kunststoffaufarbeitung stark erhöht.

Mit dem erfindungsgemäßen Verfahren ist es möglich, Kunststoffe, aber auch Gummi oder synthetische Textilien aus dem Verband oder der Kombination mit anderen Werkstoffen so zu trennen, daß sowohl die stoffliche Wiederverwendung der Kunststoffe als auch der anderen Werkstoffe ermöglicht wird. Das Verfahren nutzt die folgenden Eigenschatten der Kunststoffe, meistens thermoplastischen Kunststoffe, aus:
1. Kunststoffe schmelzen bei Temperaturen, bei denen die mit ihnen zusammen verwendeten anderen Werkstoffe noch fest sind.
2. Kunststoffe in flüssiger Form sind mit vielen Flüssigkeiten nicht oder nur sehr schwer mischbar.

Eine Trennung der Kunststoffe von anderen Materialien kann z. B. folgendermaßen durchgeführt werden:
Verbrauchte Hausgeräte, z. B. elektrische Geräte und Werkzeuge, werden auf eine Schmelze aufgegeben, deren Temperatur unterhalb 400°C, in der Regel bei ca. 200°C gehalten wird. Bei dieser Temperatur schmelzen die in diesem Bauteil enthaltenen Thermoplaste. Hat die Schmelze eine höhere Dichte als die Thermoplaste, bildet sich eine Schicht von flüssigen Thermoplasten auf dem Schmelzbad. Die anderen Werkstoffe, z. B. bei den Hausgeräten das Eisen und das Kupfer der Elektromotoren, bleiben fest und sinken wegen ihrer hohen Dichte auf den Boden der Schmelze, von dem sie von Zeit zu Zeit mit einer geeigneten Austragsvorrichtung entfernt werden.

Platinen, die die elektronischen Vorrichtungen tragen und im allgemeinen hauptsächlich aus Duroplasten bestehen, werden nicht schmelzen und werden, entsprechend ihrem Metallanteil, entweder absinken oder auf dem Schmelzbad schwimmen und zusammen mit dem flüssigen Kunststoff abgezogen und später mechanisch, z. B. mittels eines Siebes, vom flüssigen Kunststoff getrennt. Ebenso ist das Verhalten der vernetzten Polymere, Elastomere und Duromere, die nicht schmelzen.

Die nicht verflüssigten Werkstoffe werden einer bekannten, weiteren Verarbeitung, z. B. einem pyrometallurgischen Verfahren, unterzogen. Die flüssigen Thermoplaste werden einer weiteren, degradativen Behandlung zugeführt, beispielsweise in einem Extruder, wie in der oben genannten PCT/EP 91/00959 beschrieben, um z. B. die darin enthaltenen Kohlenwasserstoffe wieder zu gewinnen.

Bei der Verflüssigung der Thermoplaste werden in Abhängigkeit von der angewendeten Temperatur Weichmacher und andere Verbindungen, aber auch Chlorwasserstoff aus PVC, verflüchtigt. Deshalb muß dafür gesorgt werden, daß die entstehenden Gase abgesaugt und einer Gasreinigung zugeführt werden. Auf diese Weise erfolgt gleichzeitig ein Abtrennen der in den flüssigen Thermoplasten bei der Weiterverarbeitung störenden Begleitstoffe.

Es können natürlich auch andere, aus Kunststoffen und anderen Werkstoffen bestehende, Gegenstände dieser Behandlung unterzogen werden. Aber auch mit Kunststoffen überzogene andere Werkstoffe können auf diese Weise aufgearbeitet werden.

Für die Durchführung des Verfahrens eignet sich jeder Apparat, der eine gasdichte Aufgabevorrichtung, einen direkt oder indirekt beheizten Behälter für das Schmelzbad, eine Absaugevorrichtung für die entstehenden Gase und eine Austragsvorrichtung für die verflüssigten Thermoplaste und die nicht verflüssigten anderen Werkstoffe hat.

Für das Schmelzbad können alle Stoffe Verwendung finden, die unterhalb 400°C schmelzen, eine geringe oder gar keine Löslichkeit oder Mischbarkeit für verflüssigte Thermoplaste haben und die sich bei den anzuwendenen Temperaturen wenig oder gar nicht zersetzen, sowie einen niedrigen Dampfdruck in diesem Temperaturbereich besitzen.

Wählt man Schmelzen oder Flüssigkeiten mit niedrigerer Dichte als die von den Thermoplasten abzutrennenden Werkstoffe, dann sinken diese in der Flüssigkeit zu Boden. Dafür kommen z.B. vegetabile Öle, Thermoöle, aber auch Salzschmelzen in Frage.

Wählt man Schmelzen mit hoher Dichte, wie z. B. Zinn oder Blei, so bleiben die nicht geschmolzenen Teile an der Oberfläche des Bades und werden zusammen mit den flüssigen Thermoplasten ausgetragen und später getrennt.

Die folgenden Beispiele dienen der weiteren Erläuterung des erfindungsgemäßen Verfahrens:

### Beispiel 1

### Enthalogenieren in einem Schmelzebad durch Reaktion mit diesem

Es wurde ein 60 cm langes Rohr mit einem Durchmesser von 10 cm als Schmelzkessel für eine Bleischmelze unten mit einer Lochplatte versehen, die etwa 250 Bohrungen mit einem Durchmesser von 1 mm besitzt (vgl. Bild 1). Die Lochplatte sitzt in einem Flansch, der gestattet, das Rohr mit einem Schmelzekanal hochdruckfest mit einem Extruder zu verbinden. Der Flansch kann präzise temperiert werden, so daß seine Temperatur etwas niedriger ist als der Schmelzpunkt des Metalles.

Als für die Versuche sehr geeignet erschien Blei, da es bei 327°C schmilzt und sehr weit bis nahezu 1000°C erhitzt werden kann, ohne zu sieden. Mit Blei lassen sich daher alle gewünschten Temperaturbedingungen einstellen, zudem erschien die hohe Dichte des Bleis und seine Affinität zu Chlor als günstig. Der im Extruder verflüssigte Kunststoff wurde in das im Rohr befindliche geschmolzene Blei gedrückt.

Nach Vorversuchen zeigte sich, daß es zwar für jede Kunststoffart eine optimale Temperatur gibt, bei der ein gewünschter Abbau bei den vorhandenen weiteren Verfahrensbedingungen von 500 mm Badhöhe sich einstellt, daß jedoch auch für Gemische aus den verschiedensten Kunststoffen leicht optimale Bedingungen gefunden werden können, bei welchen sowohl ein totaler Abscheidegrad für Halogenide wie ein Zersetzen der Polymerwerkstoffe bis zu Gas oder zu Ölen oder Wachsen (hier ist die Konsistenz nach Abkühlen auf jeweils Raumtemperatur gemeint) erreicht werden kann. Als die beste Lösung ergab sich eine Koppelung der in der Patentschritt PCT/EP 91/00959 beschriebenen Extrusionsanlage mit thermischer Abspaltung der Masse des organisch in den Polymeren gebundenen Chlors aus gemischten Kunststoffabfällen. So konnten bei ca. 300°C in der verwendeten Extruderstufe I der Kaskade die Chlorgehalte bereits auf <3000 ppm gedrückt werden. Im Bleibad von 400°C und mehr konnten dann die Chlorgehalte auf <1 ppm abgesenkt werden. Es zeigte sich zudem, daß dank des intensiven Wärmeübergangs von der Metallschmelze zu den dünnen Kunststoff-Schmelzesträngen beim Durchtreten durch die Bleischmelze die Polymere weitgehender abgebaut wurden, als im Extruder unter entsprechenden Bedingungen.

### Beispiel 2

### Enthalogenieren durch Zugabe von Hilfsstoffen in eine Polymerschmelze

1. In die 350°C heiße Kunststoffschmelze, welche 0,5 % organisch gebundenes Chlor enthält, wird die gleiche Menge (ca. 0,5 %) Tetralin (Tetrahydronaphtalin) in einem Schneckenkneter eingemischt. Das organisch gebundene Chlor wird in HCL überführt, welches an einer Entgasungsöffnung der Maschine abgezogen wird. Die Schmelze wird dann in einem Keramikfilter mit Porengrößen von <3 µm gefiltert. In der gefilterten Schmelze wurden bei nachfolgenden Analysen noch <10 ppm Chlor gefunden.
2. In die 300°C heiße Schmelze mit einem Gehalt von 0,5 % organisch gebundenem Chlor, die sich in einem Schneckenkneter befindet, wird Wasserstoffgas mit einem Druck von 50 bar eingeleitet. Die Schmelze wird dann in einer Entgasungszone des Schneckenkneters evakuiert. In der Schmelze finden sich nach dieser Behandlung noch <5 ppm organisch gebundenes Chlor.

### Beispiel 3

### Enthalogenieren von vernetzten Polymeren im festen, zerkleinerten Zustand

In einem Labor-Stempelkneter, der auf einer Temperatur von 200°C gehalten wird, werden 0,5 kg Abfallkautschuk in Stücken aus unterschiedlichen Rezepturen aufgegeben. Dieses Gemisch enthält ca. 1,5 % Chlor in Form verschiedener organischer und anorganischer und anorganischer Verbindungen. Das Gemisch wird 3 Minuten geknetet und dabei die Temperatur auf 220°C gesteigert. Die Drehzahl des Stempelkneters beträgt 60 U/min. Nach drei Minuten wird in die Kammer der laufenden Maschine für 1 Minute Wasserstoffgas eingeleitet. Dann wird der Kneter entladen. Die nachfolgende Analyse ergibt noch einen Chlorgehalt von 15 ppm organisch gebundenen Chlors.

## Patentansprüche

1. Verfahren zum Recycling von Polymerwerkstoffen,
dadurch gekennzeichnet,
daß die Polymerwerkstoffe, ggf. nach dem Entfernen von anderen Materialien, bei Temperaturen, bei welchen die Polymere eine dünnflüssige Schmelze bilden oder sich in niedermolekulare Bestandteile zersetzen, mit Hilfsstoffen in Kontakt gebracht werden, wobei die in den Polymerwerkstoffen enthaltenen Halogene mit den Hilfsstoffen Halogenide bilden, welche aus dem Gemisch abgetrennt werden.

2. Verfahren nach Anspruch 1,
dadurch gekennzeichnet,
daß die Polymerwerkstoffe und die Hilfsstoffe dadurch in Kontakt gebracht werden, daß die Polymerwerkstoffe in eine Schmelze eingebracht werden, die die Hilfsstoffe enthält oder daraus besteht.

3. Verfahren nach Anspruch 2,
dadurch gekennzeichnet,
daß die Schmelze eine Metallschmelze, Metalloxidschmelze oder Glasschmelze ist.

4. Verfahren nach Anspruch 1,
dadurch gekennzeichnet,
daß die Hilfsstoffe in eine Polymerschmelze, in ein Pulver aus bereits abgebauten Polymeren oder eine Lösung daraus eingebracht werden.

5. Verfahren nach Anspruch 4,
dadurch gekennzeichnet,
daß die Hilfsstoffe in eine Polymerschmelze eingearbeitet werden, aus der vorher die Hauptmenge der Halogene thermisch ausgetrieben wurde.

6. Verfahren nach einem der Ansprüche 1 bis 5,
dadurch gekennzeichnet,
daß die gebildeten Halogenide durch physikalische Trennverfahren aus dem Gemisch abgetrennt werden.

7. Verfahren nach Anspruch 6,
dadurch gekennzeichnet,
daß die Halogenide durch Filtration oder Schwerkraftabtrennung von den aus den Polymerabfällen entstandenen Ölen oder anderen Produkten getrennt werden.

8. Verfahren nach Anspruch 6,
dadurch gekennzeichnet,
daß die Halogenide durch Abdestilieren der flüssigen Polymerabfälle bzw. der daraus hergestellten Öle von diesen abgetrennt werden.

9. Verfahren nach Anspruch 6,
dadurch gekennzeichnet,
daß die gebildeten Halogenide im Bereich der Schmelztemperatur der Polymerabfälle flüchtig sind und im gasförmigen Zustand aus dem Gemisch abgetrennt werden.

10. Verfahren nach Anspruch 1, wobei die Polymerwerkstoffe zusammen mit anderen Materialien in Form von Gegenständen, die aus thermoplastischen Kunststoffen und anderen Materialien bestehen, entfernt werden,
dadurch gekennzeichnet,
daß dies Gegenstände mit einem Bad aus einem unterhalb 400°C flüssigem Material in Kontakt gebracht werden, wo die Gegenstände in flüssige Polymere und nichtflüssige, andere Werkstoffe zerlegt werden.

11. Verfahren nach Anspruch 10,
dadurch gekennzeichnet,
daß die Trennung der flüssigen Polymere und nichtflüssigen, anderen Werkstoffe mechanisch erfolgt.

12. Verfahren nach einem der Ansprüche 1 bis 11,
dadurch gekennzeichnet,
daß die aus der Aufarbeitung erhaltenen enthalogenierten Produkte einer weiteren Behandlung zugeführt werden.
